# EUROPEAN PATENT APPLICATION

(11) **EP 2 763 207 A1**
(43) Date of publication of application: **06.08.2014**
(21) Application number: 13181434.5
(22) Date of filing: 23.08.2013
(51) Int. Cl.: H01M 2/10

(54) **Battery pack assembly**

(30) Priority: 01.02.2013 KR 20130011986
(71) Applicant: Samsung SDI Co., Ltd., Gyeonggi-do (KR)
(72) Inventor: Lee, Eun-Joong, Yongin-si, Gyeonggi-do (KR); Moon, Dae-Yon, Yongin-si, Gyeonggi-do (KR)
(74) Representative: Gulde & Partner

(57) **Abstract**

A battery pack assembly includes a battery cell; a first case including a first surface support contacting a first surface of the battery cell and a first lateral surface support bent from the first surface support toward a lateral surface of the battery cell; a second case including a second surface support contacting a second surface of the battery cell, and a second lateral surface support bent from the second surface support toward the lateral surface of the battery cell, wherein at least a part of an external surface of the second lateral surface support overlaps the first lateral surface support and an internal surface of the second lateral surface support contacts the lateral surface of the battery cell; and a hook portion having a through hole and protruding from the external surface of the second lateral surface support, wherein the hook portion is spaced from the second surface support.

## Description

### CROSS-REFERENCE TO RELATED APPLICATION

This application claims priority to and the benefit of Korean Patent Application No. 10-2013-0011986, filed on February 1, 2013 in the Korean Intellectual Property Office, the disclosure of which is incorporated herein in its entirety by reference.

### BACKGROUND

### 1. Field

One or more embodiments of the present invention relate to a battery pack assembly.

### 2. Description of the Related Art

Secondary batteries, which are rechargeable batteries, are different from primary batteries that are not designed to be recharged. Secondary batteries are widely used in electronic devices such as cellular phones, smart phones, tablet computers, notebook computers, digital cameras, electric cars, electric bicycles, and uninterruptable power supplies (UPS).

Secondary batteries can be classified into a can type battery, which is manufactured into a cylindrical shape or a rectangular shape according to the shape of a case accommodating a battery unit, and a pouch type battery having flexibility.

Korean Patent Publication No. 2011-0059252 discloses a structure of a battery pack assembly using a case that accommodates a cylindrical secondary battery. However, when designing portable electronic devices such as a notebook computer or a tablet computer having a small thickness, a rectangular secondary battery having a small thickness rather than a battery pack assembly including a cylindrical battery may be used.

When manufacturing a battery pack assembly using a plurality of rectangular secondary batteries having a small thickness, it is desirable to allow the battery pack assembly to maintain slimness as a whole and to maintain a stable structure capable of withstanding impacts and vibrations.

When the battery pack assembly is installed in a mechanical device or an electronic apparatus, even if impacts and vibrations are applied to the battery pack assembly, the position at which the battery pack assembly is installed may be stably maintained. Thus, the battery pack assembly may be fixed to the mechanical device or the electronic apparatus using a fastening device such as a screw.

However, when the battery pack assembly is fixed using the fastening device such as a screw, a strong force may be applied to a portion where the battery pack assembly and the screw are coupled to each other, and thus a case accommodating a battery cell may be deformed, which may result in a defective assembling state of the battery pack assembly.

### SUMMARY

One or more embodiments of the present invention include a battery pack assembly that is designed to be slim.

One or more embodiments of the present invention also include a battery pack assembly that may maintain slimness as a whole and may maintain a stable structure capable of withstanding impacts and vibrations.

One or more embodiments of the present invention also include a battery pack assembly in which an assembling state of a case may be stably maintained even when the battery pack assembly is fixed using a fastening device.

Additional aspects of the present invention will be set forth, in part, in the description which follows and will, in part, be apparent from the description. Additional aspects of the invention may also be learned by practice of the presented embodiments.

According to one or more embodiments of the present invention, a battery pack assembly includes a battery cell; a first case including a first surface support contacting a first surface of the battery cell and a first lateral surface support bent from the first surface support toward a lateral surface of the battery cell; a second case including a second surface support contacting a second surface of the battery cell, and a second lateral surface support bent from the second surface support toward the lateral surface of the battery cell, wherein at least a part of an external surface of the second lateral surface support overlaps the first lateral surface support and an internal surface of the second lateral surface support contacts the lateral surface of the battery cell; and a hook portion having a through hole and protruding from the external surface of the second lateral surface support, wherein the hook portion is spaced from the second surface support.

A stepped portion having a smaller thickness than that of the second lateral surface support may be at an end of the at least a part of the external surface of the second lateral surface support contacting the first lateral surface support.

The stepped portion may extend along at least a part of an edge of the battery cell.

The hook portion may be at a lateral surface of the stepped portion in an extension direction of the stepped portion.

The hook portion may protrude outward in a direction parallel to the first surface and the second surface of the battery cell.

One surface of the hook portion may be spaced from a surface of the second surface support toward a surface of the first surface support.

The hook portion may further include an enhancement plate extending in a direction crossing an extension direction of the hook portion, and wherein the enhancement plate is coupled to the second lateral surface support so as to enhance the sturdiness of the hook portion.

The through hole of the hook portion may penetrate in a direction crossing an extension direction of the first surface of the battery cell and in a direction crossing the extension direction of the second surface of the battery cell.

A plurality of the stepped portions may be spaced from each other along the edge of the battery cell.

The stepped portion may include a coupling protrusion protruding outward, and the first lateral surface support may include a coupling groove portion coupled to the coupling protrusion.

The second lateral surface support may include an open slot at an edge thereof facing the first lateral surface support, and the first lateral surface support may include a wing portion protruding from an edge of the first lateral surface support, wherein the wing portion is configured to be inserted into the open slot.

A plurality of the battery cells may be arranged along extension directions of the first surface and the second surface of the battery cell between the first case and the second case.

The first surface support and the second surface support may surround an outer perimeter of a group of the plurality of battery cells, and wherein the first case and the second case may extend along adjacent edges of the adjacent battery cells and may further include a plurality of crossbars coupled to the first surface support and the second surface support.

The battery pack assembly may further include a spacer between the adjacent battery cells between the crossbar of the first case and the crossbar of the second case.

The first surface support and the second surface support may surround an outer perimeter of a group of the plurality of battery cells, and the first surface support and the second surface support may include an opening that externally exposes the first surface and the second surface of the battery cells.

The battery pack assembly may further include a label coupled to an external surface of each of the first lateral surface support and the second lateral surface support so as to cover the opening.

The first surface support and the second surface support may further include a groove portion configured to receive an edge of the label.

The battery pack assembly may further include a protection circuit module between the first case and the second case and electrically coupled to the battery cells.

Preferably, the combined thickness of the first lateral surface supporting unit and of the stepped portion corresponds (is preferably equal) to the thickness of the second lateral surface supporting unit. Here, the thickness is measured in the x direction. Preferably, the length in x direction of the first surface supporting unit equals at least to the length in z direction of the first lateral surface supporting unit. More preferably, the first surface supporting unit comprises a length being 1,5 to 2 times the length of the first lateral surface supporting unit. Preferably, the length in z direction of the first lateral surface supporting unit is at least a quarter or a third of the length in z direction of the second lateral surface supporting unit. Preferably, the length in x direction of the hook portion equals at least approximately to the length in z direction of an external surface of the second lateral surface supporting unit which extends above (in z direction) the hook portion. Preferably, the thickness in z direction of the hook portion equals at least approximately to the thickness in x direction of the second lateral surface supporting unit.

### BRIEF DESCRIPTION OF THE DRAWINGS

These and/or other aspects will become apparent and more readily appreciated from the following description of the embodiments, taken in conjunction with the accompanying drawings of which:

FIG. 1 is a schematic exploded perspective view illustrating a relationship between components of a battery pack assembly according to an embodiment of the present invention;

FIG. 2 is an exploded perspective view illustrating an assembling process showing an enlarged portion of the battery pack assembly of FIG. 1;

FIG. 3 is a schematic partial perspective view illustrating an operational state of assembly and usage of the battery pack assembly of FIG. 1;

FIG. 4 is a partial cross-sectional view of the battery pack assembly of FIG. 3;

FIG. 5 is a partial cross-sectional view of a battery pack assembly according to another embodiment of the present invention; and

FIG. 6 is a cross-sectional view of a battery pack assembly according to a comparative example which is provided to show a comparison of operational states between the battery pack assembly illustrated in FIG. 6 and the battery pack assemblies illustrated in FIGS. 1 to 5.

### DETAILED DESCRIPTION

Hereinafter, the present invention will be described more fully with reference to the accompanying drawings, in which exemplary embodiments of the invention are shown. The present invention may, however, be embodied in many different forms and should not be construed as limited to the exemplary embodiments set forth herein. Rather, these embodiments are provided so that this disclosure will be thorough and complete, and will fully convey the scope of the invention to those of ordinary skilled in the art. The terminology used herein is for the purpose of describing particular embodiments only and is not intended to be limiting of the present invention. As used herein, the singular forms 'a', 'an', and 'the' are intended to include the plural forms as well, unless the context clearly indicates otherwise. It will be further understood that the terms "comprises' and/or 'comprising,' when used in this specification, specify the presence of stated features, integers, operations, elements, components, and/or groups but do not preclude the presence or addition of one or more other features, integers, operations, elements, components, and/or groups thereof. It will be understood that, although the terms 'first', 'second', 'third', etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present invention. Expressions such as "at least one of," when preceding a list of elements, modify the entire list of elements and do not modify the individual elements of the list.

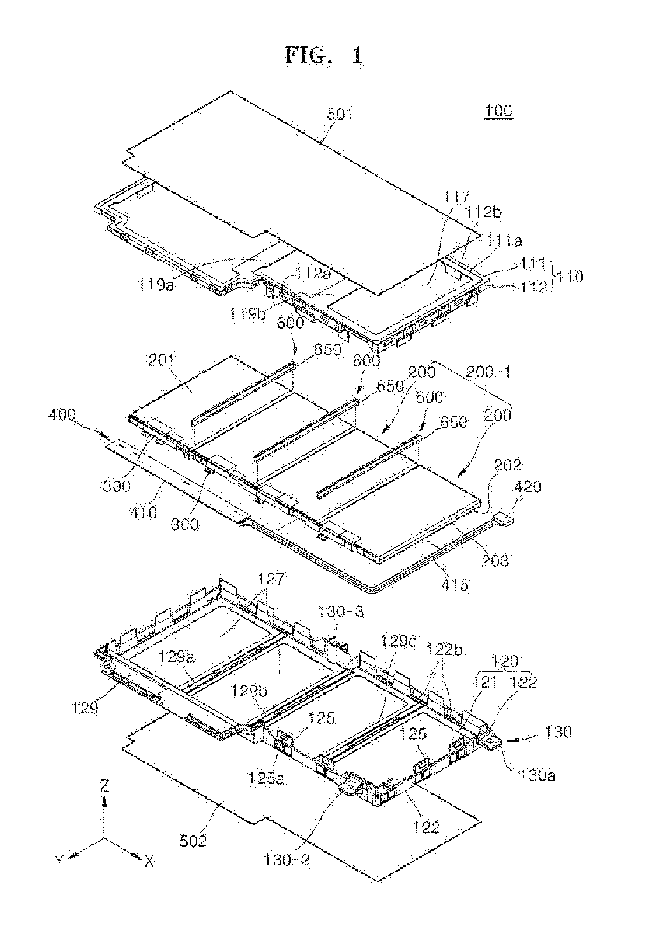

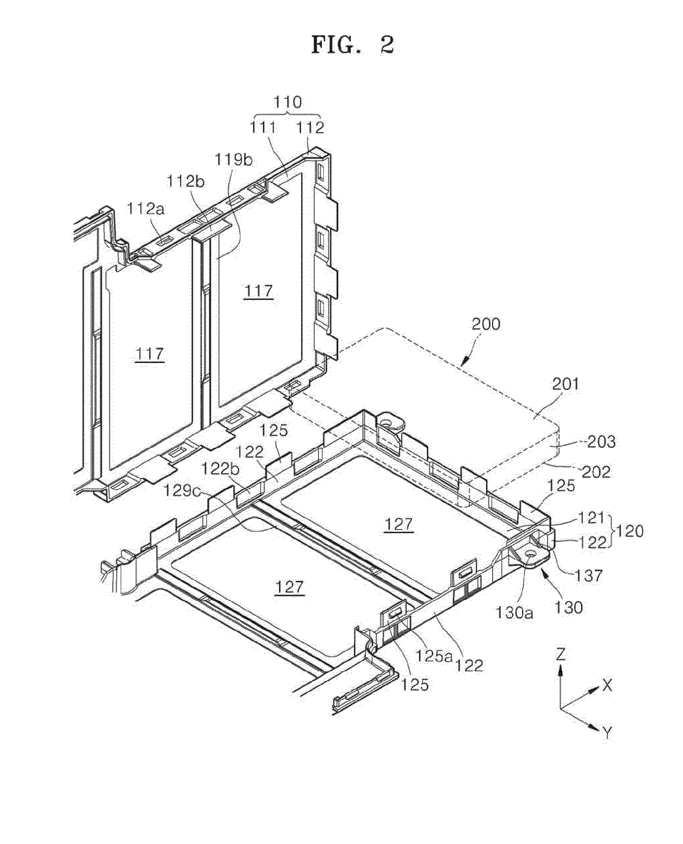

FIG. 1 is a schematic exploded perspective view illustrating a relationship between components of a battery pack assembly 100 according to an embodiment of the present invention. FIG. 2 is an exploded perspective view illustrating an assembling process showing an enlarged portion of the battery pack assembly 100 of FIG. 1.

The battery pack assembly 100 according to the embodiment illustrated in FIGS. 1 and 2 includes a plurality of battery cells 200, a first case 110 that supports one surface (or a first surface) 201 of the battery cells 200, a second case 120 that supports the other surface (or a second surface) 202 of the battery cells 200, and a plurality of hook portions 130 that protrude outward from the second case 120.

The plurality of battery cells 200 may be configured as rechargeable secondary batteries. The battery cell 200 may be configured as, for example, a lithiumion battery.

Each of the plurality of battery cells 200 accommodates an electrode assembly (not shown) therein. The electrode assembly (not shown) may be manufactured by stacking a positive plate, a negative plate, and a separator interposed between the positive plate and the negative plate, and by rolling the stack in a form of a jelly roll. The exterior of the battery cell 200 surrounding the electrode assembly (not shown) may be manufactured in the form of a hollow (e.g., a hollow can) which may be formed of a metal material such as aluminum or an aluminum alloy.

The plurality of battery cells 200 may be arranged side by side along one direction. In the illustrated embodiment, the plurality of battery cells 200 are consecutively arranged between the first case 110 and the second case 120 along a direction in which the one surface 201 and the other surface 202 of the battery cell 200 extend.

The plurality of battery cells 200 are electrically coupled to each other in series and/or in parallel using a lead plate 300 which may be formed of an electroconductive material so as to form a battery cell group 200-1.

Although FIG. 1 shows a case where one battery pack assembly 100 is assembled by coupling four battery cells 200 in series, the embodiments are not limited to such an arrangement (e.g., an amended structure), and the arrangement direction and the number of the battery cells 200 may be modified in various ways.

The plurality of battery cells 200 may be electrically coupled to a protection circuit module 400. The protection circuit module 400 functions to reduce the possibility of (or prevent) overheating or explosion of the battery pack assembly 100 that may occur due to a phenomenon such as overcharge, overdischarge, or overcurrent.

The protection circuit module 400 is located (or accommodated) between the first case 110 and the second case 120, and is disposed (or located) in the circuit supporting unit 129 of the second case 120.

The protection circuit module 400 may include a substrate 410 and a protection device (not shown) that is installed at one side of the substrate 410 or inside the substrate 410. The protection device may be configured using a safety element that includes a passive element such as a resistor or a condenser (or capacitor) or an active element such as a field transistor. Alternatively, the safety element may be configured using integrated circuits.

A connector (or coupler) 420 may be coupled to one side of the protection circuit module 400 via a wiring 415. The connector 420 functions to apply electricity to an external electronic device at which the battery pack assembly 100 is installed (or coupled).

The first case 110 and the second case 120 are formed so as to surround an outer periphery (or perimeter) of the battery cell group 200-1. The first case 110 and the second case 120 may be coupled to each other so as to form a space accommodating (or housing) the plurality of battery cells 200 and the protection circuit module 400 therein.

For example, the first case 110 and the second case 120 may be formed by injection molding using an insulating plastic material. The plastic material may be, for example, polyvinyl chloride resin (PVC), polystyrene (PS), polypropylene (PP), polycarbonate (PC), or polyimide (PI), but embodiments of the present invention are not limited thereto.

The first case 110 includes a first surface supporting unit (or first surface support) 111 that contacts at least a part of the one surface 201 of the battery cell 200, and a first lateral surface supporting unit (e.g., a first lateral surface support or a first side surface support) 112 that is bent (or angled) toward a lateral surface (e.g., a side surface) 203 of the battery cell 200 from the first surface supporting unit 111.

The first case 110 includes a plurality of openings 117 in order to reduce (or minimize) the entire thickness (and/or weight) thereof. The one surface (e.g., the first surface) 201 of the plurality of battery cells 200 is externally exposed by the plurality of openings 117.

A groove portion 111a extending along an edge of the battery cell group 200-1 is formed in the first surface supporting unit 111. A label 501 is attached to (or positioned on or coupled to) the groove portion 111a so as to cover the openings 117 of the first case 110.

The second case 120 includes a second surface supporting unit (or second surface support) 121 that contacts at least a part of the other surface 202 of the battery cell 200, and a second lateral surface supporting unit (e.g., a second lateral surface support or a second side surface support) 122 that is bent (or angled) toward a lateral surface 203 of the battery cell 200 from the second surface supporting unit 121.

The second case 120 includes a plurality of openings 127 that externally expose the other surface (e.g., the second surface) 202 of the plurality of battery cells 200. A label 502 is also attached to (or positioned on or coupled to) the second case 120 so as to cover the openings 127 of the second case 120.

A swelling phenomenon in which the battery cell 200 swells may occur during the charging or discharging of the battery cell 200. At this time, a height of an internal space between the first case 110 and the second case 120 when they are coupled to each other may be designed to be larger than a thickness of the battery cell 200 when a battery cell is at the most swelled state. As such, a space may be provided in the cavity accommodating the battery pack assembly 100 so that even though the battery cell 200 swells, a possibility of the battery pack assembly 100 becoming deformed may be reduced (or the deformation of the battery as a whole may be prevented or substantially prevented).

The first case 110 and the second case 120 extend along edges of the battery cells 200. The first case 110 may include a plurality of crossbars 119a and 119b coupled to the first surface supporting unit 111 of the first case 110, and the second case 120 may include a plurality of crossbars 129a, 129b, and 129c coupled to the second surface supporting unit 121 of the second case 120.

Because an external surface of the battery cell 200 may have a conductive property, the battery cells 200 may be insulated from each other. Spacers 600 that insulate the battery cells 200 from each other and reduce a possibility that the battery cells 200 move (or prevent the battery cells 200 from moving) are disposed (or located) between the adjacent battery cells 200. Each of the spacers 600 is disposed (or located) between the adjacent battery cells 200 between the crossbars 119a and 119b of the first case 110 and the crossbars 129a, 129b, and 129c of the second case 120.

The spacer 600 may be formed of an electric insulating material such as plastic or rubber, and may be formed to be longer in size than the battery cell 200.

For example, the spacers 600 may be coupled to the lateral surfaces (e.g., side surfaces) of the adjacent battery cells 200. For example, when the lateral surface of the battery cell 200 has an externally convex shape, both the lateral surfaces of the spacer 600 may have a concave shape, and thus the battery cell 200 may be stably supported.

The spacer 600 may include a blocking unit 650 at one end thereof. The blocking unit 650 may extend in a direction perpendicular to the longitudinal direction of the spacer 600. For example, the blocking unit 650 may extend in a left direction and a right direction at the end of the spacer 600, and thus the spacer 600 and the blocking unit 650 may have a T shape as a whole.

The blocking unit 650 may contact ends of the lateral surfaces of the battery cells 200 adjacent to the spacer 600. The blocking unit 650 may contact the crossbars 119a and 119b of the first case 110 and the crossbars 129a, 129b, and 129c of the second case 120.

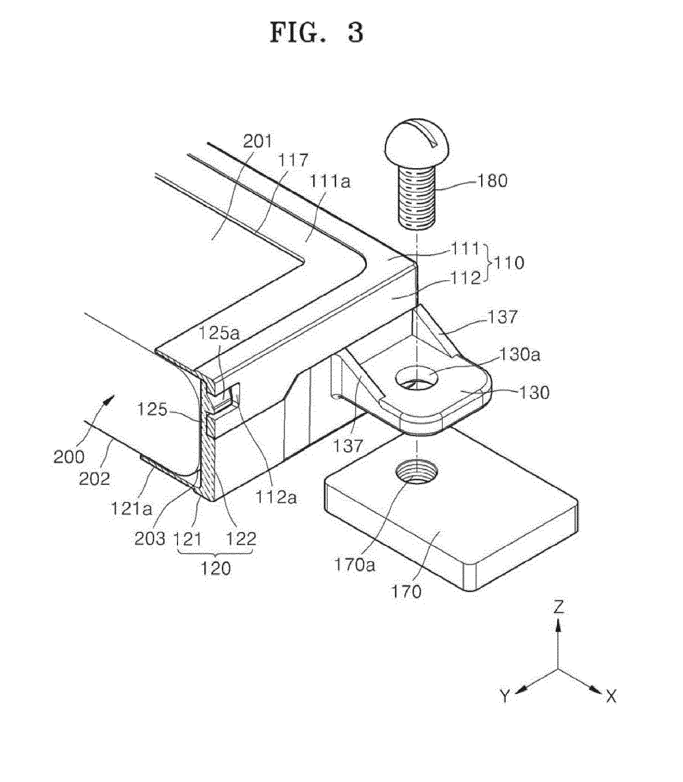

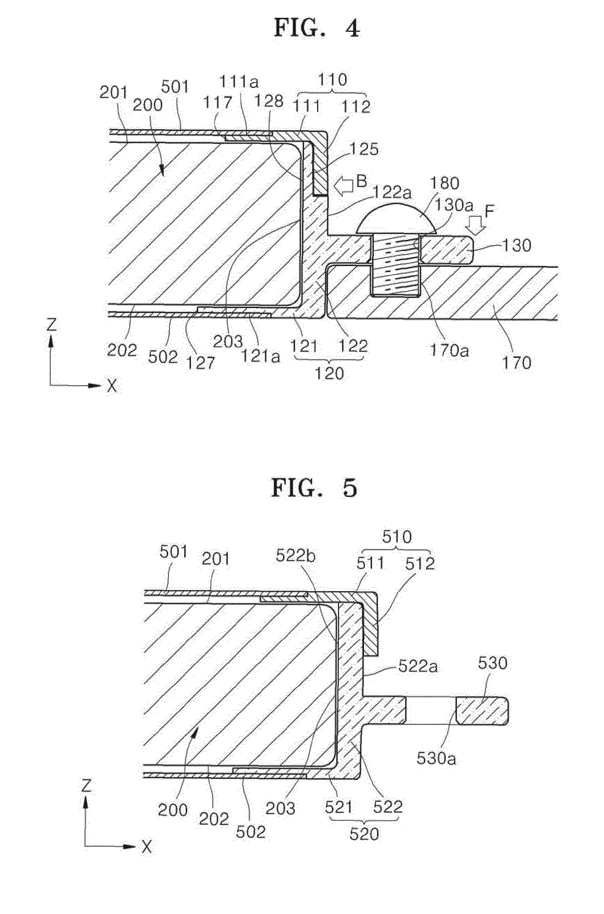

FIG. 3 is a schematic partial perspective view illustrating an operational state of assembly and usage of the battery pack assembly of FIG. 1. FIG. 4 is a partial cross-sectional view of the battery pack assembly of FIG. 3. For convenience of description, the label 501 illustrated in FIG. 4 is not illustrated in FIG. 3.

When the battery cells 200, the first case 110, and the second case 120 are coupled to each other, the first surface supporting unit 111 contacts the one surface 201 of the battery cell 200, and the second surface supporting unit 121 contacts the other surface 202 of the battery cell 200.

At least a part of an external surface 122a of the second lateral surface supporting unit 122 is supported (or abutted) by the first lateral surface supporting unit 112, and an internal surface 128 of the second lateral surface supporting unit 122 contacts the lateral surface 203 of the battery cell 200.

The hook portions 130 are formed so as to protrude outward from the external surface 122a of the second lateral surface supporting unit 122, and the hook portions 130 are formed so as to be spaced apart from the second surface supporting unit 121 toward the first surface supporting unit 111.

Referring to FIG. 4, a plurality of stepped portions 125 having a smaller thickness than that of the second lateral surface supporting unit 122 are formed at an end of the external surface 122a of the second lateral surface supporting unit 122 contacting (or overlapping) the first lateral surface supporting unit 112. The first lateral surface supporting unit 112 of the first case 110 is accommodated (or lodged) in the stepped portion 125, and an internal surface of the first lateral surface supporting unit 112 contacts the stepped portion 125.

The first lateral surface supporting unit 112 functions to press the second lateral surface supporting unit 122 of the second case 120 in a direction of arrow B and to support the second lateral surface supporting unit 122 so that the second case 120 is not stretched outward and separated from the battery cell by force F acting when a screw 180 is coupled to the hook portion 130.

Referring to FIGS. 1 and 2, the stepped portion 125 extends along at least a part of the edge of the battery cell 200. The plurality of stepped portions 125 may be spaced apart from each other along (e.g., in an extension direction) the edges of the battery cells 200. In other words, the plurality of stepped portions 125 are spaced apart from each other at distances (e.g., predetermined distances) along (e.g., in an extension direction) the edges of the first case 110.

Each of the plurality of stepped portions 125 includes a coupling protrusion 125a protruding outward on a surface thereof. The first lateral surface supporting unit 112 includes coupling groove portions 112a that are respectively coupled to the coupling protrusions 125a. The coupling protrusion 125a and the coupling groove portion 112a maintain an engagement state as illustrated in FIG. 3, and preserve a coupling state of the first case 110 and the second case 120 so as to be stably maintained.

In addition, the second lateral surface supporting unit 122 includes a plurality of slots 122b that are open at an end facing the first lateral surface supporting unit 112. The plurality of slots 122b are disposed (or arranged) so as to be spaced apart from each other along (e.g., in an extension direction) the edges of the second case 120.

The first lateral surface supporting unit 112 includes a plurality of wing portions 112b that protrude from the end (or edge) of the first lateral surface supporting unit 112 and that are respectively inserted into the slots 122b. The wing portions 112b are respectively inserted into the slots 122b in a state where the first case 110 and the second case 120 are coupled to each other, and thus it may be possible to stably maintain the coupling state of the first case 110 and the second case 120 which may also withstand impacts and vibrations.

Referring to FIG. 2, the hook portion 130 may be formed at a lateral (or side) surface of the stepped portion 125 in the extension direction (e.g., outward direction) of the stepped portion 125. As such, by disposing (or coupling) the hook portion 130 at the lateral surface of the stepped portion 125 so as to be adjacent to the stepped portion 125, force generated due to the engagement acts on the hook portion 130. Thus, the possibility of the hook portion 130 and the second case 120 becoming deformed may be reduced (or the deformation of the hook portion 130 and the second case 120 may be prevented or substantially prevented) because the stepped portion 125 contacts the first lateral surface supporting unit 112 of the first case 110.

Referring to FIGS. 3 and 4, the hook portion 130 may be formed so as to extend in a direction parallel to the one surface 201 and the other surface 202 of the battery cell 200. The hook portion 130 may be spaced apart from a surface (e.g., an extension surface) of the second surface supporting unit 121 of the second case 120 in a direction toward a surface (e.g., an extension surface) of the first surface supporting unit 111 in order to be assembled with an installation portion 170 of an external device to which the battery pack assembly 100 is fixed.

A through hole 130a of the hook portion 130 may be formed so as to penetrate in a direction crossing the extension directions (e.g., length directions) of the one surface 201 and the other surface 202 of the battery cell 200.

When the battery pack assembly 100 is fixed to the installation portion 170 of the external device, the screw 180 is coupled to a fastening hole 170a of the installation portion 170 via the through hole 130a of the hook portion 130. In the illustrated embodiment, the screw 180 is shown as a fastening device, but the embodiment is not limited thereto. For example, the battery pack assembly 100 may be fixed to the installation portion 170 of the external device by using different types of fastening devices such as a clip or a rivet.

The hook portion 130 may include enhancement plates 137 at both edges thereof, respectively. The enhancement plates 137 extend in a direction crossing the extension direction of the hook portion 130 so as to be coupled to the second lateral surface supporting unit 122, thereby enhancing the hardness (or sturdiness) of the hook portion 130.

In the embodiments illustrated in FIGS. 1 to 4, the hook portion 130 is provided outside the second case 120 in such a way that the hook portion 130 may be integrally formed with the second case 120 by injection molding, but the embodiments are not limited thereto. In other words, after the hook portion 130 and the second case 120 are individually manufactured, the hook portion 130 may be coupled to the second case 120 using a separate fastening device such as a screw (not shown), or the hook portion 130 may be inserted into the second case 120 by forming an engagement groove (not shown) in the second case 120.

According to the embodiments having the above-described configuration, because the first case 110 and the second case 120 that surround the battery cell 200 contact the surfaces of the battery cells 200 and support the battery cells 200, the battery pack assembly 100 designed to be slim may be configured using the coupling structure of the first case 110 and the second case 120 to have a small thickness.

In addition, because a state where at least a part of the external surface 122a of the second lateral surface supporting unit 122 of the second case 120 constantly contacts the first lateral surface supporting unit 112 of the first case 110 is maintained, the structure of the pack assembly 100 may be stably maintained even in a case where force is applied to the hook portion 130 provided outside the second case 120 and in a case where impacts and vibrations are applied to the hook portion 130 from the outside.

FIG. 5 is a partial cross-sectional view of a battery pack assembly according to another embodiment of the present invention.

The battery pack assembly according to the embodiment illustrated in FIG. 5 includes the battery cell 200, a first case 510 that includes a first surface supporting unit 511 contacting the one surface 201 of the battery cell 200 and a first lateral surface supporting unit 512 bent toward the lateral surface 203 of the battery cell 200 from the surface supporting unit 511, a second case 520 that includes a second surface supporting unit 521 contacting the other surface 202 of the battery cell 200 and a second lateral surface supporting unit 522 bent toward the lateral surface 203 of the battery cell 200 from the second surface supporting unit 521, and a hook portion 530 that is formed so as to protrude outward from the second lateral surface supporting unit 522 of the second case 520 and includes a through hole 530a. A label 501 and a label 502 respectively adhere to external surfaces of the first case 510 and the second case 520.

Although the battery pack assembly of FIG. 5 has a similar configuration as that of the battery pack assembly of the embodiments illustrated in FIGS. 1 to 4, a difference is that a separate stepped portion is not formed in the second lateral surface supporting unit 522 of the second case 520, and the battery pack assembly of FIG. 5 is deformed so as to constantly maintain the thickness of the second lateral surface supporting unit 522 as a whole. Accordingly, an external surface 522a of the second lateral surface supporting unit 522 is supported by an internal surface of the first lateral surface supporting unit 512, and an internal surface 522b of the second lateral surface supporting unit 522 contacts the lateral surface 203 of the battery cell 200.

Even in the embodiment illustrated in FIG. 5, a fastening device such as a screw (not shown) is coupled to the hook portion 530, and thus when force is applied to the second case 520 via the hook portion 530, the first lateral surface supporting unit 512 of the first case 510 supports the second lateral surface supporting unit 522 of the second case 520. Thus, a coupling structure of the first case 510 and the second case 520 may be stably maintained, thereby reducing the possibility of the battery pack assembly from being deformed (or preventing the deformation of the battery as a whole).

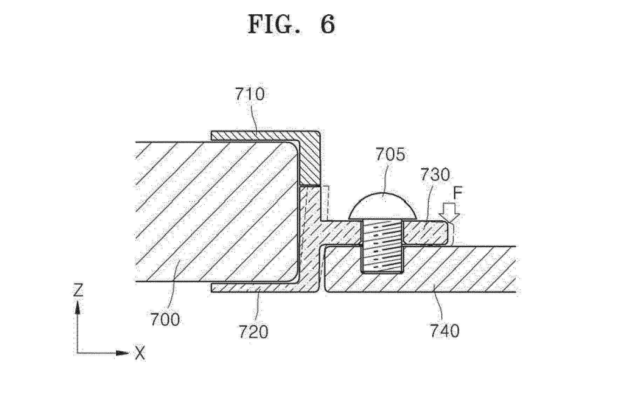

FIG. 6 is a cross-sectional view of a battery pack assembly according to a comparative example which is provided to show a comparison of operational states between the battery pack assembly illustrated in FIG. 6 and the battery pack assemblies illustrated in FIGS. 1 to 5.

Unlike the embodiments illustrated in FIGS. 1 to 5, in the embodiment of FIG. 6, because an end of a first case 710 is disposed (or located) so as to contact an end of a second case 720, the first case 710 does not support the second case 720 supporting the other surface of the battery cell 700. A hook portion 730 disposed (or located) outside the second case 720 is fixed to an installation portion 740 using a screw 705, and thus when force is applied to the hook portion 730 in a direction of arrow F, the second case 720 may become deformed in a direction in which the second case 720 becomes distant (or spaced apart) from the battery cell 700, as illustrated by a dotted line. Accordingly, a gap is generated in a portion where the first case 710 and the second case 720 are coupled to each other, which results in a defective coupling state of the battery pack assembly.

In the battery pack assembly according to the embodiments illustrated in FIGS. 1 to 5, because the first lateral surface supporting unit of the first case supports the second lateral surface supporting unit of the second case, and even though force is applied to the hook portion, the possibility of the second lateral surface supporting unit becoming separated from the battery cell is reduced (or the second lateral surface supporting unit becoming separated from the battery cell is prevented), thereby stably maintaining an assembling state of the battery pack assembly.

In the battery pack assembly according to the above-described embodiments, the first case and the second case contact the surface of the battery, surround the battery cell, and support the battery cell, and thus it is possible to configure the battery pack assembly to be slim, by using a coupling structure of the first case and the second case having a small thickness.

In addition, because at least a part of the external surface of the second lateral surface supporting unit of the second case constantly contacts the first lateral surface supporting unit of the first case, the structure of the battery pack assembly can be stably maintained even in a case where force is applied to the hook portion for the assembling of the battery pack assembly and in a case where impacts and vibrations are applied to the hook portion from the outside.

It should be understood that the exemplary embodiments described therein should be considered in a descriptive sense only and not for purposes of limitation. On the contrary, the exemplary embodiments are intended to cover various modifications and equivalent arrangements within the scope of the appended claims, and equivalents thereof. Descriptions of features or aspects within each embodiment should typically be considered as available for other similar features or aspects in other embodiments.

## Claims

1. A battery pack assembly (100) comprising:
a battery cell (200);
a first case (110; 510) comprising a first surface support (111; 511) contacting a first surface (201) of the battery cell (200) and a first lateral surface support (112; 512) bent from the first surface support (111, 511) toward a lateral surface (203) of the battery cell (200);
a second case (120; 520) comprising a second surface support (121; 521) contacting a second surface (202) of the battery cell (200), and a second lateral surface support (122; 522) bent from the second surface support (121; 521) toward the lateral surface (203) of the battery cell (200), wherein at least a part of an external surface (122a; 522a) of the second lateral surface support (122; 522) overlaps the first lateral surface support (112; 512) and an internal surface (522b) of the second lateral surface support (122; 522) contacts the lateral surface (203) of the battery cell (200); and
a hook portion (130; 150) having a through hole (130a; 150a) and protruding from the external surface (122a; 522a) of the second lateral surface support (122; 522), wherein the hook portion (130; 150) is spaced from the second surface support (121; 521).

2. The battery pack assembly of claim 1, wherein a stepped portion (125) having a smaller thickness than that of the second lateral surface support (122) is at an end of the at least a part of the external surface (122a; 522a) of the second lateral surface support (122) contacting the first lateral surface support (112).

3. The battery pack assembly of claim 2, wherein the stepped portion (125) extends along at least a part of an edge of the battery cell (200).

4. The battery pack assembly of claim 2 or 3, wherein the hook portion (130) is at a lateral surface of the stepped portion (125) in an extension direction of the stepped portion(125).

5. The battery pack assembly of one of the preceding claims, wherein the hook portion (130; 150) protrudes outward in a direction parallel to the first surface (201) and the second surface (202) of the battery cell (200).

6. The battery pack assembly of claim 5, wherein one surface of the hook portion (130; 150) is spaced from a surface of the second surface support (121; 521) toward a surface of the first surface support (111; 151).

7. The battery pack assembly of claim 5 or 6, wherein the hook portion (130; 150) further comprises an enhancement plate (137) extending in a direction crossing an extension direction of the hook portion (130; 150), and wherein the enhancement plate (137) is coupled to the second lateral surface support (122; 522) so as to enhance the sturdiness of the hook portion (130; 150).

8. The battery pack assembly of one of claims 5 to 7, wherein the through hole (130a; 150a) of the hook portion (130; 150) penetrates in a direction crossing an extension direction of the first surface (201) of the battery cell (200) and in a direction crossing the extension direction of the second surface (202) of the battery cell (200).

9. The battery pack assembly of one of claims 2 to 8, wherein a plurality of the stepped portions (125) are spaced from each other along the edge of the battery cell (200).

10. The battery pack assembly of one of claims 2 to 9, wherein the stepped portion (125) comprises a coupling protrusion (125a) protruding outward, and the first lateral surface support (112; 512) comprises a coupling groove portion (112a) coupled to the coupling protrusion (125a).

11. The battery pack assembly of one of claims 2 to 10, wherein the second lateral surface support (122; 522) comprises an open slot (122b) at an edge thereof facing the first lateral surface support (112; 512), and the first lateral surface support (112; 512) comprises a wing portion (112b) protruding from an edge of the first lateral surface support (112; 512), wherein the wing portion (112b) is configured to be inserted into the open slot (112b).

12. The battery pack assembly of one of claim 2 to 11, wherein a plurality of the battery cells (200) are arranged along extension directions of the first surface (201) and the second surface (202) of the battery cell (200) between the first case (110; 510) and the second case (120; 520) and wherein the first surface support (111; 151) and the second surface support (121; 521) surround an outer perimeter of a group of the plurality of battery cells (200), and wherein the first case (110; 510) and the second case (120; 520) extend along adjacent edges of the adjacent battery cells (200) and further comprise a plurality of crossbars (119, 129) coupled to the first surface support (111; 151) and the second surface support (121; 521).

13. The battery pack assembly of claim 12, further comprising a spacer (600) between the adjacent battery cells (200) between the crossbar (119) of the first case (110; 510) and the crossbar (129) of the second case(120; 520).

14. The battery pack assembly of claim 12 or 13, wherein the first surface support (111; 151) and the second surface support (121; 521) surround an outer perimeter of a group of the plurality of battery cells (200), and the first surface support (111; 151) and the second surface support (121; 521) comprise an opening (117, 127) that externally exposes the first surface (201) and the second surface (202) of the battery cells (200), further comprising a label (501, 502) coupled to an external surface of each of the first lateral surface support (112; 512) and the second lateral surface support (122; 522) so as to cover the opening (117, 127).

15. The battery pack assembly of one of the preceding claims, further comprising a protection circuit module (400) between the first case (110; 510) and the second case (120; 520) and electrically coupled to the battery cells (200).
